# EUROPEAN PATENT APPLICATION

(11) **EP 4 675 150 A1**
(43) Date of publication of application: **07.01.2026**
(21) Application number: 24186304.2
(22) Date of filing: 03.07.2024
(51) Int. Cl.: F17C 1/02

(54) **GAS STORAGE TANK**

(71) Applicant: Water Stuff & Sun GmbH, 85716 Unterschleissheim (DE)
(72) Inventor: Dias, Cláudio, Porto (PT)
(74) Representative: Grünecker Patent- und Rechtsanwälte PartG mbB

(57) **Abstract**

A gas storage tank (1), comprising: a case (2) surrounding a gas storage space (3) by an inner wall portion (2a1) thereof; and at least one gas storage unit (4) accommodated in the gas storage space (3) and configured to exchange gas therewith. In order to provide a gas storage tank with an increased gas storage capacity the gas storage tank (1) further comprises: a stiffening structure (5) which mechanically connects a plurality of wall face parts (6a, 6b, 6c) of the inner wall portion (2a1) with each other across the gas storage space (3).

## Description

The present invention relates to a gas storage tank, in particular, to a gas storage tank having at least one gas storage unit provided in a gas storage space.

WO 2007 032 742 A1 discloses a gas storage tank having a tank case which surrounds a gas storage space. A plurality of gas storage units are provided in the gas storage space to exchange gas therewith.

In particular, the gas storage units have a spherical shape and can discharge gas into the gas storage space, from where it can be supplied to a combustion device such as a gas driven engine.

However, in the prior art there is a problem that the pressure of gas inside the gas storage space is rather limited in order not to damage the tank case, and thus the amount of gas in the gas storage space is limited.

It is thus an object of the present invention to provide a gas storage tank with an increased gas storage capacity in the gas storage space.

This object is achieved by a gas storage tank having the features of claim 1.

According to a first aspect disclosed herein, there is provided a gas storage tank, comprising: a case surrounding a gas storage space by an inner wall portion thereof; and at least one gas storage unit accommodated in the gas storage space and configured to exchange gas therewith.

Particularly differing from the prior art, the gas storage tank further comprises: a stiffening structure which mechanically connects a plurality of wall face parts of the inner wall portion with each other across the gas storage space.

Thus, a pressure load can be distributed across the storage space. In particular, a pressure load acting on the case, in particular, the inner wall portion, can be absorbed via the stiffening structure. In other words, the inner wall portion can be anchored by the stiffening structure. Consequently, a pressure inside the case can be increased, and, thus, a gas storage capacity of the gas storage tank.

The term "across" means that the stiffening structure is arranged inside of the gas storage space such that two different wall face parts are connected.

The stiffening structure may be at least partially subjected to a tension load. Then, the pressure load can be counteracted, and bulking of the stiffening structure can be avoided.

Preferably, at least two of the plurality of wall face parts have a planar shape.

Hence, the fastening of the stiffening structure to the planar wall face parts can be facilitated such as by pins, screws, adhesive, or the like. Furthermore, such wall face parts are prone to large deformation such that the stiffening structure is particularly effective.

According to a further aspect, at least two of the plurality of wall face parts may not be located in the same plane.

Thus, anchoring of the wall face parts can be reliably performed. For example, all wall face parts of a parallelepiped, such as a cuboid, inner wall portion can be interconnected to each other. In particular, all wall face parts along a periphery of the gas storage space are interconnected to each other.

According to still another aspect, one wall face part may have at least one surface normal vector different from, preferably perpendicular to, at least one surface normal vector of another wall face part, preferably at least two of the plurality of wall face parts are orientated perpendicularly to each other.

Hence, the load can be further distributed. In particular, the load path can be increased. For example, the surface normal vector of the one wall face part may be parallel, that is, opposite, to the surface normal vector of another wall surface part, and may be perpendicular to the surface normal vector of still another wall face part.

Preferably, the stiffening structure comprises at least one substantially linear element, preferably a plurality thereof.

Thereby, the load can be directed into a certain direction, that is, the linear extension direction of the linear element. Further, the assembly of the stiffening structure may be facilitated. The at least one substantially linear element may comprise or be a rod element. It may also comprise or be a wire, thread, a cord, a rope, in particular a Dyneema rope, or the like. The plurality of linear elements may comprise a combination of any of these elements. The linear element may be an element which transmits loads mainly along its longitudinal axis. It may transmit at least one of tensile or compressive loads.

In an aspect, the at least one substantially linear element may comprise or be a tubular element, that is a hollow rod element, on the inside of which a rope such as a Dyneema rope is routed.

According thereto, the linear element can be easily attached to the wall face parts by the ropes while the tubular element can be guided by the rope.

Preferably, the stiffening structure comprises at least one node element, to which at least two linear elements are connected.

Thus, the stiffening structure can be branched around the node element. In particular, the at least two linear elements are not aligned along a straight line. It is more preferable, if at least three linear elements are connected to one node element, in particular, if the at least three linear elements do not lie within one plane. For example, at least three linear elements may define a space angle of at least 0,5 pi, preferably of at least pi, more preferably of 4 pi, that is, cover the entire surrounding. It is to be noted that the number of linear elements connected to one node can be more than two, or three. For example, four, five, six, seven or even eight linear elements may be connected to one node and define the aforementioned space angle. In case of eight linear elements, a group of each four of them may lie within one plane, respectively. That is, two perpendicular planes may be defined by respective four linear elements, wherein an angle of 90° is formed between the linear elements in one plane. The node element may have a spherical shape or a cuboid shape. In addition, at least one node element may be located inside of the gas storage space.

Preferably, the stiffening structure has a three-dimensional shape.

Thus, the pressure load can be widely distributed. The three-dimensional shape is preferably formed by the linear elements and the node elements.

Preferably, the stiffening structure at least partially supports the at least one gas storage unit.

Consequently, the at least one gas storage unit can be maintained in position in the gas storage space. That is, the at least one gas storage unit may be mechanically supported by the stiffening structure. Furthermore, no additional parts may be necessary to support the gas storage unit.

According to still another aspect, a plurality of the gas storage units may be arranged in a face centered cubic structure, preferably the stiffening structure at least partially supports the plurality of the gas storage units to be arranged in a face centered cubic structure.

Hence, the gas storage units can be densely arranged in the gas storage space, and the gas capacity of the tank can be increased.

Alternatively, or additionally, the gas storage tank further comprises at least one elastic member interposed between the stiffening structure and the at least one gas storage unit.

According thereto, the at least one gas storage unit may be supported via the elastic member. Thus, the gas storage unit can be supported in a floating manner, and it is possible to reduce wear of the gas storage unit, and to damp vibrations. In other words, the elastic element may be a damping element.

According to still another aspect, at least the inner wall portion, preferably the case, may have a non-spherical shape, preferably, a parallelepiped shape.

Thereby, at least the inner wall portion can be easily manufactured. Furthermore, the surface on which the pressure acts can be made larger than in a spherical shape.

According to still another aspect, the at least one gas storage unit may have a spherical shape or a cylindrical shape.

As the at least one gas storage unit may be exposed to a larger pressure than the inner wall portion, structural safety can be ensured according to this aspect. In particular, load peaks can be avoided at the gas storage unit.

Preferably, the case is made of a material comprising, preferably consisting of, at least one of plastic, preferably a thermoset, in particular preferably polyamide, reinforced plastic, preferably glass fiber and/or carbon fiber reinforced plastic, and metal, preferably, aluminium. It can also be made of a composite material comprising any two of the aforementioned materials.

By each of these materials, light weight and sufficient mechanical strength can be ensured. It is to be noted that the case may be made of each of the materials listed above alone, or in any combination thereof. For example, it is possible to use a composite material of metal and plastic for the case.

According to still another aspect, the stiffening structure is made of a material comprising, preferably consisting of, at least one of reinforced plastic, preferably glass fiber and/or carbon fiber reinforced plastic, and metal, preferably, aluminium. If a rope or a chord is used as a linear element in the stiffening structure, the material can comprise or consist of a fiber material, in particular, a synthetic fiber material such as Dyneema.

Thus, the mechanical strength and stiffness for the stiffening structure can be ensured, while avoiding excessive weight.

According to still another aspect, the case comprises a honey-comb structure interposed between the inner wall portion and an outer wall portion.

Thus, the inertia moment of the case can be increased. Consequently, excessive deflection can be avoided.

The above aspects will become more apparent by reading the following detailed description in combination with the annexed figures.
Fig. 1 shows a perspective view being partially cut to show an inside of a gas storage tank.
Fig. 2 shows the tank of Fig. 1 with one wall portion and the gas storage units being removed.
Fig. 3 shows a detail view of the stiffening structure and the gas storage units.

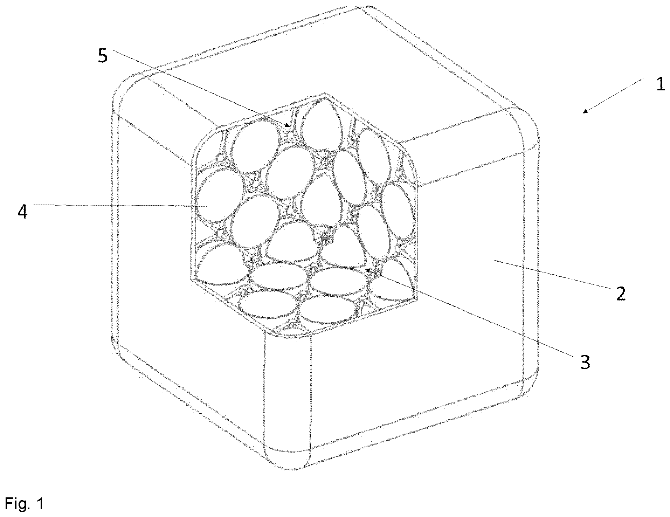

As can be taken from Figs. 1 to 3, a gas storage tank 1 comprises a case 2, a gas storage space 3, and a plurality of gas storage units 4 which are accommodated in the gas storage space 3.

The tank 1 is a tank suitable for any gas, in particular combustion gas. The tank 1 may be filled with hydrogen gas or natural gas, for example. The gas is stored in the gas storage space, on the one hand, and the gas storage units 4, on the other hand. The gas storage units 4 are structured such as to exchange gas with the gas storage space 3. To this end, the gas storage unit may have at least one inlet valve (check valve) and at least one outlet valve (check valve, preferably a pressure assisted check valve) as described in WO 2007 032 741 A1, the features of which also contribute to the present invention in a preferable manner and are incorporated herein by reference. Furthermore, the gas storage unit may have a pressure regulator upstream of the outlet valve.

Gas can be stored into the gas storage units 4 via the gas storage space 3, in particular by raising the pressure therein such that the inlet valve of the at least one gas storage unit 3 opens. If gas is discharged from the gas storage space 3, for example, to a combustion device, and the pressure in the gas storage space 3 lowers to a first predetermined pressure, the outlet valve may open such that gas from the gas storage unit 4 can flow into the gas storage space 3. If thereby, the pressure raises to another second predetermined pressure, the pressure regulator may block further outflow.

The case 2 has a wall 2a with an inner wall portion 2a1 and an outer wall portion 2a2. The inner wall portion 2a1 surrounds, that is, defines the gas storage space 3 at its inner side. The case 2, in particular, the inner wall portion 2a1 and the outer wall portion 2a2 have a parallelepiped, in particular a cuboid, shape with rounded corners, as can be taken in Fig. 1. Thus, also the gas storage space 3 has a parallelepiped, in particular a cuboid, shape.

Furthermore, the case 2 has a tank inlet and a tank outlet (not shown). The tank inlet may be connected to a refuel system while the tank outlet may be connected to the aforementioned combustion device.

The inner wall portion 2a1 has a smooth surface, that is, a differentiable shape without protrusions or recesses. The inner wall portion 2a1 is substantially planar except for the corners where it is curved.

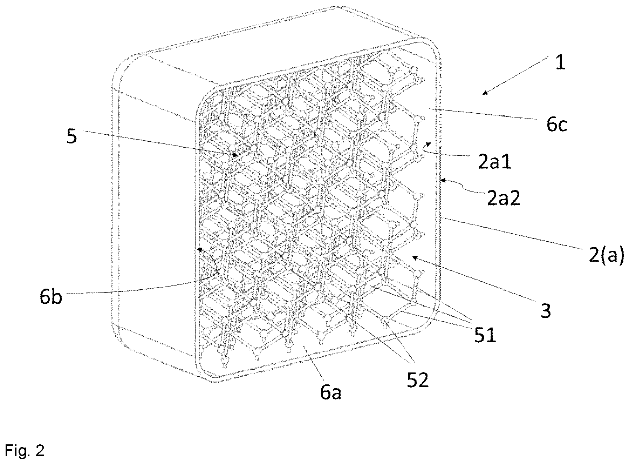

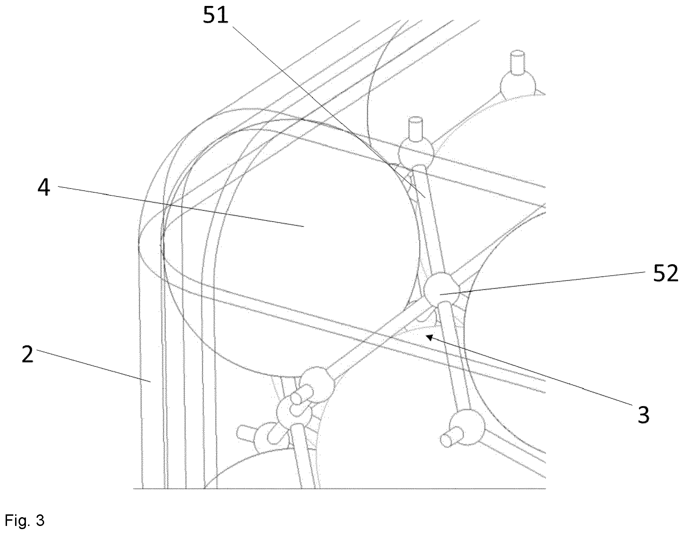

A stiffening structure 5 is arranged in the gas storage space 3, as can be taken from Figs. 2 and 3, in particular. The stiffening structure 5 has a three-dimensional overall shape. In particular, the stiffening structure has a branched shape. It is arranged to connect different wall face parts 6a, 6b, and 6c of the inner wall portion 2a1, as shown in Fig. 2. It is to be noted that the wall face parts 6a, 6b, and 6c are only labelled exemplarily here, but the wall face parts around the entire outer periphery of the gas storage space 3 (along the inner wall portion 2a1) are interconnected to each other.

In Fig. 2, the top wall portion is removed for explanatory reasons and is opposed to a bottom wall portion, a first wall face part 6a is the planar inner face of a side wall portion along a short side of the cuboid. The wall face parts 6b and 6c are planar inner faces of the side wall portions along a long side of the cuboid, and are opposed to each other. Surface normal vectors of the wall face parts 6b and 6c are point in opposite directions, that is, face each other. A surface normal vector of the wall face part 6a is perpendicular thereto.

The stiffening structure 5 has a plurality of rod elements (substantially linear elements) 51 in the form of pins. Further, it comprises spherical node elements 52 to which the rod elements 51 are attached. The rod elements 51 are attachable and detachable from the node elements 52. Thus, the rod elements 51 branch off from the node elements 52 which are located inside of the gas storage space 3. It is to be noted that here, at least in an inner region where the stiffening structure 5 is not attached to the inner wall portion 2a1, the rod elements 51 are at least partially substantially perpendicular to each other, that is, an angle of substantially 90 degrees is formed between some of adjacent rod elements 51 of one node element 52. The rod elements 51 form parallelepiped substructures which are interconnected to each other by the node elements 52.

It is to be noted that in the inner region, the rod elements 51, and thus the parallelepiped substructures are not aligned with each of the wall face parts or their respective surface normal vector. In particular, they are rotated with respect thereto about, for example, 45 degrees in the present case. Only the rod elements 51 in the outer region which are attached to the inner wall portion 2a1 are perpendicular to the respective wall face parts 6a, 6b, and 6c, and thus aligned with the surface normal vectors.

The rod elements 51 may be screwed into the inner wall portion 2a1 and into the node elements 51, or may be clipped thereto.

Thus, the rod elements 51 and the node elements 52 constitute a three-dimensional mesh interconnecting all wall face parts with each other.

The gas storage units 4 have a spherical shape. In particular, an inner wall portion and an outer wall portion of the gas storage units 4 have a spherical shape. Within the wall of the gas storage units 4, the above mentioned valves can be provided as a microstructure.

The gas storage units 4 are arranged in a face centered cubic structure, that is, centers thereof are arranged on the corners of a cube and on the centers of the cube faces. The cubes are aligned with the parallelepiped case.

The stiffening structure 5 is arranged between the gas storage units 4. Preferably, the stiffening structure 5 does not only interconnect the wall face parts of the inner wall portion 2a1 but also supports the gas storage units 4. In particular, each gas storage unit 4 in the inner region may be contacted by the stiffening structure 5 at three locations which are preferably not arranged on one line, even more preferably outside of one plane. The stiffening structure 5 may contact the gas storage units 4 at more than three locations, for example, any of four to eight, locations. Here, the rod elements 51 contact the spherical gas storage units 4 in a tangential manner. In the outer region, the gas storage units 4 adjacent to the inner wall portion 2a1 can also be supported by the inner wall portion 2a1. Node elements 52 may be arranged on centers of cube edges of the face centered cubic structures and/or the centers of the cubes.

When manufacturing the gas storage tank 1, layer for layer of the gas storage units 4 may be put into the case with, for example, the top wall portion being removed. Further, for each layer the respective node elements 52 and rod elements 51 can be provided.

Effects of the present invention will now be described.

The gas storage tank 1 can be filled with gas such as hydrogen in order to fill the gas storage units 4. During operation of the gas storage tank 1, gas is stored in the gas storage units with at least 200 bar, preferably, at least 500 bars, more preferably up to 1000 bar. Thus, the gas storage units are high pressure elements while the case 2 is a low pressure case wherein gas is stored with at least 2 bar, preferably at least 5 bar, preferably at least 10 bar, in the gas storage space 3.

To withstand these pressures, the stiffening structure 5 is provided which is arranged between the gas storage units 4 and in the gas storage space 3. Hence, the operating pressure can be increased, and the gas capacity can be increased. The rod elements 51 are at least partially subjected to tension load. Hence, the pressure load on the case 2 can be counteracted, where the rod elements may have a large stiffness in the linear extension direction. In case fiber reinforced plastics are used for the rod elements, the fibers may be aligned with the extension direction.

The wall face parts 6a, 6b, and 6c, which have different surface normal vectors and are not in the same plane, are interconnected with each other via the stiffening structure. Further, the wall face parts 6b and 6c are perpendicular to the wall face part 6a.

Thus, the pressure load can be widely distributed.

Further, said wall face parts have a planar shape.

Hence, the stiffening structure 5 can be easily attached to the inner wall portion 2a1, and contact between the wall face part and the gas storage units 4 can be established.

The linear elements 51 make the configuration compact and allow the stiffening structure 5 to pass between the gas storage units 4. Furthermore, they have a well defined load transmission direction along their longitudinal axis.

The node elements 52 allow for branching of the stiffening structure 5.

In particular, the rod elements 51 attached to one node element 52 may define a space angle of at least 0,5 pi by connecting to other node elements located at the edge centers of the cubic structure. Hence, the pressure can be widely distributed.

Modifications of the above embodiment are described in the following.

Even though not shown, elastic members may be arranged on the skin surface of the rod elements 51 such that they are interposed between the gas storage units 4 to be in contact therewith and the rod elements 51. The elastic members may be made of rubber, such as EPDM, and may have a smaller rigidity than the stiffening structure. Then, the contact by the stiffening structure with the gas storage units is established via the elastic member.

Regarding the material, the case 2 may be formed of a material comprising or being aluminium and/or polyamide. It may also be formed of a material comprising or being fiber reinforced plastic such as glass fiber and/or carbon fiber reinforced plastic.

The stiffening structure 5 may be made from a material comprising or being aluminium or reinforced plastic such as glass fiber and/or carbon fiber reinforced plastic.

The gas storage units 4 may be formed of a material comprising or being carbon fiber reinforced plastic or aluminium. The gas storage units 4 may withstand an internal pressure of at least 200 bar, preferably of 500 bar, more preferably 1000 bar.

At least part of the rod elements 51 may be formed as tubular, that is hollow, elements. In this case, a cord or rope can be routed inside of the tubular element. In this case the cord or rope may be attached to the respective wall face part while the tubular elements only contact the respective wall face part.

Further, inner wall portion 2a1 and outer wall portion 2a2 may be separated by a honeycomb structure.

Instead of rod elements 51, other linear elements such as wires, threads, ropes and cords can be used alone or in combination instead of or together with the rod elements 51. However, the stiffening structure can also comprise facial (two-dimensional) or spatial (three-dimensional) elements.

The shape of the gas storage unit may not be spherical but can be cylindrical.

Also, the case may have a shape other than the parallelepiped shape such as a cylindrical shape.

The inner wall portion may not be smooth, but may have at least one recess, protrusion and/or rib. Also, the wall face parts may not be planar but curved.

The angle between adjacent linear elements and/or the angle between a linear element and the wall face part may be different from 90°, for example, 60° or 120°. In particular, such angle may be within a range of 60° to 120°, inclusive, preferably 70° to 110°, inclusive, more preferably 80° to 100°, inclusive.

The number of linear elements branching from one node element is not limited. It can be any number between two and eight.

The arrangement of the gas storage units is not limited to the face centered cubic structure, but may be at least partially a body centered cubic structure, or an arbitrary structure.

## Claims

1. A gas storage tank (1), comprising:
a case (2) surrounding a gas storage space (3) by an inner wall portion (2a1) thereof; and
at least one gas storage unit (4) accommodated in the gas storage space (3) and configured to exchange gas therewith,
**characterized in that** the gas storage tank (1) further comprises:
a stiffening structure (5) which mechanically connects a plurality of wall face parts (6a, 6b, 6c) of the inner wall portion (2a1) with each other across the gas storage space (3).

2. The gas storage tank (1) according to claim 1, wherein at least two of the plurality of wall face parts (6a, 6b, 6c) have a planar shape.

3. The gas storage tank (1) according to claim 1 or 2, wherein at least two of the plurality of wall face parts (6a, 6b, 6c) are not located in the same plane.

4. The gas storage tank (1) according to any of the preceding claims, wherein one wall face part (6a) has at least one surface normal vector different from, preferably perpendicular to, at least one surface normal vector of another wall face part (6b, 6c), preferably at least two of the plurality of wall face parts are orientated perpendicularly to each other.

5. The gas storage tank (1) according to any of the preceding claims, wherein the stiffening structure (5) comprises at least one substantially linear element (51), preferably a plurality thereof.

6. The gas storage tank (1) according to claim 5, wherein the stiffening structure (5) comprises at least one node element (52), to which at least two linear elements (51) are connected.

7. The gas storage tank (1) according to any of the preceding claims, wherein the stiffening structure (5) has a three-dimensional shape.

8. The gas storage tank (1) according to any of the preceding claims, wherein the stiffening structure (5) at least partially supports the at least one gas storage unit (4).

9. The gas storage tank (1) according to any of the preceding claims, wherein a plurality of the gas storage units (4) is arranged in a face centered cubic structure, preferably the stiffening structure (5) at least partially supports the plurality of the gas storage units (4) to be arranged in a face centered cubic structure.

10. The gas storage tank (1) according to claim 8 or 9, wherein the gas storage tank (1) further comprises at least one elastic member interposed between the stiffening structure (5) and the at least one gas storage unit (4).

11. The gas storage tank (1) according to any of the preceding claims, wherein at least the inner wall portion (2a1), preferably the case (2), has a non-spherical shape, preferably, a parallelepiped shape.

12. The gas storage tank (1) according to any of the preceding claims, wherein the at least one gas storage unit (4) has a spherical shape or a cylindrical shape.

13. The gas storage tank (1) according to any of the preceding claims, wherein the case (2) is made of a material comprising, preferably consisting of, at least one of plastic, preferably a thermoset, in particular preferably polyamide, reinforced plastic, preferably glass fiber and/or carbon fiber reinforced plastic, and metal, preferably, aluminium.

14. The gas storage tank (1) according to any of the preceding claims, wherein the stiffening structure (5) is made of a material comprising, preferably consisting of, at least one of reinforced plastic, preferably glass fiber and/or carbon fiber reinforced plastic, metal, preferably aluminium, and fibers, in particular synthetic fibers.

15. The gas storage tank (1) according to any of the preceding claims, wherein the case (2) comprises a honey-comb structure interposed between the inner wall portion (2a1) and an outer wall portion.
